# EUROPÄISCHE PATENTSCHRIFT

(11) **EP 2 161 092 B1**
(45) Veröffentlichungstag und Bekanntmachung des Hinweises auf die Patenterteilung: **18.04.2012**
(21) Anmeldenummer: 08015643.3
(22) Anmeldetag: 04.09.2008
(51) Int. Cl.: B23F 23/12

(54) **Verzahnungsschleifmaschine und Verfahren zum Abrichten eines Schleifwerkzeuges**
Gear grinder and method for dressing a grinding tool
Machine à meuler des roues dentées et procédé de dressage d'un outil de meulage

(43) Veröffentlichungstag der Anmeldung: 10.03.2010
(73) Patentinhaber: GLEASON-PFAUTER, Maschinenfabrik GmbH, 71636 Ludwigsburg (DE)
(72) Erfinder: Kobialka, Claus, Dr., 71672 Marbach a.N. (DE)
(74) Vertreter: Kraus, Jürgen Helmut

(56) Entgegenhaltungen:
- DE-U1- 29 717 193
- US-A- 4 339 895
- US-A- 4 400 916
- US-A- 4 765 095

## Beschreibung

Die Erfindung bezieht sich auf eine Verzahnungsschleifmaschine mit einem stationären Maschinenbett, einer in Bezug auf das Maschinenbett längs einer ersten Linearbewegungsachse bewegbaren ersten Linearbewegungseinheit, einer an der ersten Linearbewegungseinheit um eine zu deren erster Linearbewegungsachse orthogonale erste Schwenkbewegungsachse schwenkbar angeordneten ersten Schwenkbewegungseinheit, einer an der ersten Schwenkbewegungseinheit um eine zu der ersten Schwenkbewegungsachse orthogonale Werkzeugspindelachse drehend antreibbar angeordneten Werkzeugspindel, einer längs einer zweiten Linearbewegungsachse bewegbaren zweiten Linearbewegungseinheit, an der eine um eine zu der zweiten Linearbewegungsachse orthogonale Abrichtspindelachse drehend antreibbare Abrichtspindel angeordnet ist, sowie auf ein Verfahren zum Abrichten eines Schleifwerkzeugs in dieser Verzahnungsschleifmaschine.

Deartige Verzahnungsschleifmaschinen dienen zur Hartfeinbearbeitung der Verzahnung eines Werkstücks mit einem Schleifwerkzeug, bei dem es sich beispielsweise um eine Schleifscheibe oder eine Schleifschnecke handeln kann. Das Schleifwerkzeuge erleidet durch seinen Bearbeitungseingriff mit dem Werkstück eine Abnutzung. Deshalb muss es nach einer gewissen Anzahl von Bearbeitungsvorgängen abgerichtet werden. Durch das Abrichten wird die erforderliche Geometrie des Schleifwerkzeugs wiederhergestellt und gleichzeitig die Oberfläche des Schleifwerkzeugs geschärft.

Für das Abrichten sind zwei Verfahrensprinzipien bekannt, nämlich das Form-Abrichten und das Profil-Abrichten. Beim Form-Abrichten durchläuft das Abrichtwerkzeug auf dem abzurichtenden Schleifwerkzeug eine gesteuerte Bewegungsbahn und erzeugt dadurch die gewünschte Kontur des Schleifwerkzeugs. Beim Profil-Abrichten ist das Abrichtwerkzeug entsprechend der gewünschten Geometrie des Schleifwerkzeugs ausgebildet.

Eine bekannte Zahnradwälzfräsmaschine (EP 0 614 406 B1) weist einen auf einem Maschinenbett in dessen Längsrichtung horizontal bewegbaren Ständer mit einem daran vertikal bewegbar geführten Schlitten auf, an dessen dem Ständer abgewandter freier Seite ein um eine horizontale Schwenkachse verschwenkbarer Träger für eine Wälzschnecke angeordnet ist, deren Drehachse sich orthogonal zur Schwenkachse des Trägers erstreckt. Das Problem des Abrichtens eines Schleifwerkzeugs tritt bei dieser Zahnradwälzfräsmaschine nicht auf.

Bei einer bekannten Verzahnungsschleifmaschine der eingangs genannten Art (DE 297 17 193 U1) sind ein die Werkzeugspindel tragender Innenschleifkopf und eine die Abrichtspindel tragende Linearbewegungseinheit gemeinsam an der ersten Schwenkbewegungseinheit angeordnet. Bei dieser Anordnung verlaufen die Werkzeugspindelachse und die Abrichtspindelachse zueinander parallel. Es ist nur ihr gegenseitiger Abstand einstellbar, nicht jedoch ihre relative Neigung. Ebenso verlaufen bei einer Verzahnungsschleifmaschine anderer Art (US-A-4 409 16) eine Schleifspindelachse und eine Abrichtspindelachse zueinander parallel angeordnet und können gegeneinander nur orthogonal zu den Spindelachsen verstellt werden.

Der Erfindung liegt die Aufgabe zugrunde, eine Verzahnungsschleifmaschine der eingangs genannten Art zu schaffen, mit der das jeweils verwendete Schleifwerkzeug in seiner auf die Werkzeugspindelachse aufgespannten Position abgerichtet werden kann.

Erfindungsgemäß wird dies in vorrichtungsmäßiger Hinsicht dadurch gelöst, dass die zweite Linearbewegungseinheit an der ersten Linearbewegungseinheit angeordnet ist, aber nicht an der ersten Schwenkbewegungseinheit angeordnet ist.

In verfahrensmäßiger Hinsicht wird diese Aufgabe mit einer erfindungsgemäßen Verzahnungsschleifmaschine gelöst, deren Abrichtspindel an einer an der zweiten Linearbewegungseinheit um eine zu der zweiten Linearbewegungsachse parallele zweite Schwenkbewegungsachse schwenkbar angeordneten zweiten Schwenkbewegungseinheit gelagert ist, indem die Schwenkwinkelstellung der mit einem Abrichtwerkzeug versehenen Abrichtspindel in Bezug auf die zweite Schwenkbewegungsachse auf einen an ein auf der Werkzeugspindel angeordnetes Schleifwerkzeug angepassten festen Wert eingestellt und das

Abrichtwerkzeug mit dem Schleifwerkzeug gemäß einem gewünschten Abrichtverfahren in Eingriff gebracht wird.

Dadurch ist es mit der erfindungsgemäßen Verzahnungsschleifmaschine und dem darauf ausgeführten Abrichtverfahren möglich, Schleifwerkzeuge unterschiedlicher Art, beispielsweise Schleifschnecken oder Schleifscheiben, nach einem jeweils gewünschten Abrichtverfahren, beispielsweise Profil-Abrichten oder Form-Abrichten, abzurichten.

Außerdem wird durch die Achsanordnung der erfindungsgemäßen Verzahnungsschleifmaschine eine besonders geringe Werkstückaufspannhöhe und somit eine hohe Systemsteifigkeit erreicht.

Vorzugsweise soll die erste Schwenkbewegungsachse die Werkzeugspindelachse schneiden. Soweit dieses Erfordernis nicht genau erfüllt wird, kann dem durch eine softwaremäßige Korrektur in der Steuerung Rechnung getragen werden. In jedem Fall soll aber die Abweichung klein sein. Vorzugsweise soll der Kreuzungspunkt dieser beiden Achsen auf ein Gebiet lokalisiert sein, dessen Ausdehnung weniger als 0,1 mm beträgt.

Die zweite Linearbewegungsachse und die zweite Schwenkbewegungsachse sollen möglichst genau miteinander fluchten und die Werkzeugspindelachse schneiden. Sofern dies nicht exakt eingehalten wird, soll der Toleranzbereich für den Kreuzungspunkt dieser Achsen vorzugsweise kleiner als 5 µm sein.

Vorzugsweise soll auch die zwischen verschiedenen Achsen geforderte Orthogonalität möglichst genau eingehalten werden. Etwaige Toleranzabweichungen können jedoch durch die Steuerungssoftware ausgeglichen werden.

In der folgenden Beschreibung wird die Erfindung anhand eines Ausführungsbeispiels unter Bezugnahme auf die Zeichnung näher erläutert. Hierin zeigen:
- Fig. 1: eine perspektivische Ansicht einer Verzahnungsschleifmaschine, deren Ge- häuse entfernt worden ist,
- Fig. 2: eine detailliertere Ansicht einer Anordnung der auch in Fig. 1 erkennbaren Spindeln für ein Schleifwerkzeug und ein Abrichtwerkzeug, und

- Fig. 3: eine Ansicht auf die Rückseite der mit ihrem Gehäuse versehenen Verzah- nungsschleifmaschine und einem dort angeordneten Werkzeugwechsler.

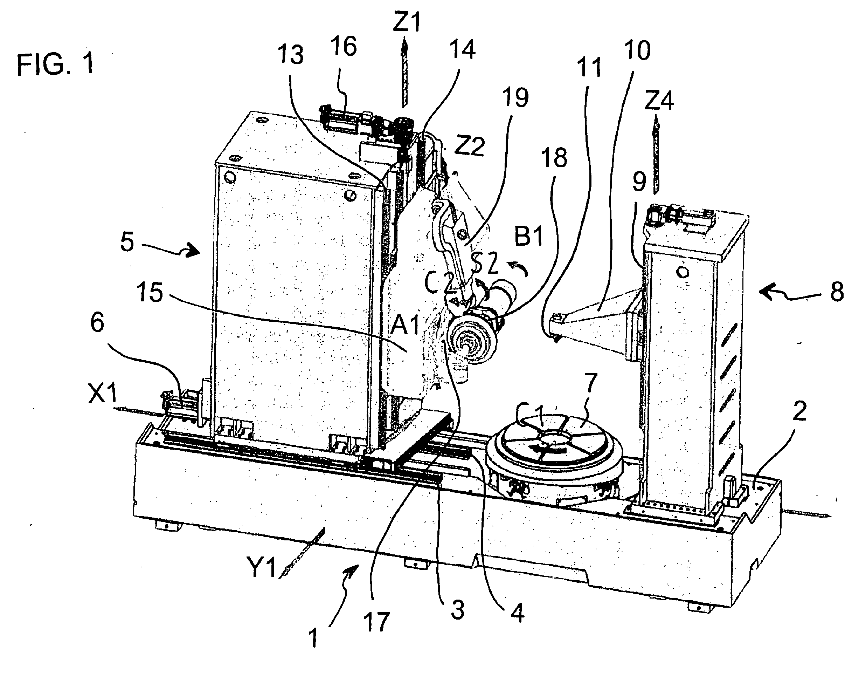

Gemäß Fig. 1 weist eine Verzahnungsschleifmaschine ein Maschinenbett 1 auf, das im wesentlichen die Form eines langgestreckten, flachen Quaders besitzt, dessen Längsachse sich parallel zu einer für die Aufstellung der Verzahnungsschleifmaschine vorgesehenen Bodenebene erstreckt, dessen eine größere Seitenfläche die zur Bodenebene weisende Unterseite und dessen ihr gegenüberliegende andere größere Seitenfläche 2 die Oberseite bildet. An der Oberseite 2 sind sich parallel zur Quaderlängsachse erstreckende Linearführungen 3, 4 angeordnet, auf denen ein Ständer 5 längs einer zur Quaderlängsachse parallelen vierten Linearbewegungsachse X1 bewegbar abgestützt ist. Die Bewegung des Ständers 5 längs der vierten Linearbewegungsachse X1 erfolgt durch einen gesteuerten Linearbewegungsantrieb 6.

Die Linearführungen 3, 4 erstrecken sich etwa über die in Fig. 1 linke Hälfte des Maschinenbetts 1. Nahe dem in Fig. 1 rechten Ende der Linearführungen 3, 4 ist auf der Oberseite 2 des Maschinenbetts 1 eine um eine zur Oberseite 2 orthogonale Werkstückdrehachse C1 drehend antreibbare Drehbewegungseinheit 7 angeordnet. Auf ihr wird ein das Werkstück darstellendes, zu schleifendes Zahnrad aufgespannt und um seine Achse gemäß den Erfordernissen des Schleifvorgangs gesteuert gedreht.

Über dem in Fig. 1 rechten Endbereich des Maschinenbetts 1 erhebt sich eine zu dessen Oberseite 2 orthogonale Säule 8, deren zur Oberseite 2 paralleler Querschnitt etwa quadratisch ist. An der zur Drehbewegungseinheit 7 weisenden Seite der Säule 8 sind zur Oberseite 2 orthogonale Linearführungen 9 angeordnet, an denen ein in Richtung auf die Drehbewegungseinheit 7 auskragender Reitstock 10 in einer zur Werkstückdrehachse C1 parallelen Linearbewegungsrichtung verschiebbar geführt ist. Der Reitstock 10 weist einen mit der Werkstückdrehachse C1 fluchtenden Zentrieransatz 11 auf, der mit dem auf der Drehbewegungseinheit 7 aufgespannten Werkstück zentrierend in Eingriff gebracht wird.

Der Ständer 5 ist von vier zur Oberseite 2 des Maschinenbetts 1 orthogonalen Seitenflächen begrenzt, von denen sich zwei parallel und zwei orthogonal zur Längsachse des quaderförmigen Maschinenbetts 1 erstrecken. An der zur Drehbewegungseinheit 7 weisenden Seitenfläche 12 sind sich orthogonal zur Oberseite 2 und parallel zur Werkstückdrehachse C1 erstreckende Linearführungen 13, 14 angeordnet, auf denen eine erste Linearbewegungseinheit 15 längs einer zur Werkstückdrehachse C1 parallelen ersten Linearbewegungsachse Z1 bewegbar geführt ist. Die Bewegung der ersten Linearbewegungseinheit 15 längs der ersten Linearbewegungsachse Z1 erfolgt durch einen gesteuerten Linearbewegungsantrieb 16.

In einem zum Maschinenbett 1 weisenden unteren Bereich der ersten Linearbewegungseinheit 15 ist an ihrer zur Drehbewegungseinheit 7 weisenden Seite eine erste Schwenkbewegungseinheit 17 um eine zu der ersten Linearbewegungsachse Z1 orthogonale und zur Längsachse des quaderförmigen Maschinenbetts 1 parallele erste Schwenkbewegungsachse A1 schwenkbar angeordnet. An dieser ersten Schwenkbewegungseinheit 17 ist eine Werkzeugspindel 18 mit zur ersten Schwenkbewegungsachse A1 orthogonaler Werkzeugspindelachse B1 angeordnet. Die Werkzeugspindel 18 ist um ihre Werkzeugspindelachse B1 durch einen gesteuerten Antrieb drehend antreibbar. Ferner ist sie längs einer mit der Werkzeugspindelachse B1 fluchtenden dritten Linearbewegungsachse Y1 gesteuert bewegbar.

An der zur Drehbewegungseinheit 7 weisenden Stirnseite des dem Maschinenbett 1 abgewandten oberen Bereichs der ersten Linearbewegungseinheit 15 ist eine zweite Linearbewegungseinheit 19 längs einer zweiten Linearbewegungsachse Z2 gesteuert bewegbar geführt. Die zweite Linearbewegungsachse Z2 erstreckt sich in einer zu der ersten Linearbewegungsachse Z1 und zu der ersten Schwenkbewegungsachse A1 parallelen Ebene. In dieser Ebene ist sie gegen die erste Linearbewegungsachse Z1 derart geneigt, daß sie in dem vom Maschinenbett 1 weg weisenden Richtungssinn unter einem spitzen Winkel auf die erste Linearbewegungsachse Z1 zuläuft.

An dem zur Werkzeugspindel 18 weisenden unteren Ende der zweiten Linearbewegungseinheit 19 ist eine zweite Schwenkbewegungseinheit 20 angeordnet. Diese ist um eine zur zweiten Linearbewegungsachse Z2 parallele zweite Schwenkbewegungsachse C2 schwenkbar. An dieser zweiten Schwenkbewegungseinheit 20 ist eine um eine Abrichtspindelachse S2 drehend antreibbare Abrichtspindel 21 angeordnet. Die Abrichtspindelachse S2 erstreckt sich orthogonal zu der zweiten Schwenkbewegungsachse C2 und der zweiten Linearbewegungsachse Z2.

Die Werkzeugspindel 18 dient zur Aufnahme und zum drehenden Antrieb eines Verzahnungsschleitwerkzeugs, mit dem die Verzahnung eines auf der Drehbewegungseinheit 7 aufgespannten Werkstücks feinbearbeitet wird. Insbesondere kann es sich bei dieser Feinbearbeitung um Wälzschleifen oder um Profilschleifen handeln. Das Verzahnungsschleifwerkzeug kann beispielsweise eine Schleifscheibe oder eine Schleifschnecke sein.

Die Abrichtspindel 21 dient zur Aufnahme und zum drehenden Antrieb eines Abrichtwerkzeugs für das Formabrichten oder das Profilabrichten. Beim Formabrichten durchläuft das scheibenförmige Abrichtwerkzeug auf dem abzurichtenden Schleifwerkzeug eine gesteuerte Bewegungsbahn und erzeugt dadurch die gewünschte Kontur des Schleifwerkzeugs. Beim Profilabrichten ist das scheibenförmige Abrichtwerkzeug entsprechend der gewünschten Kontur des Schleifwerkzeugs ausgebildet.

Die für die verschiedenen Abrichtverfahren und Werkzeuggeometrien erforderlichen Relativstellungen zwischen dem Abrichtwerkzeug und dem Schleifwerkzeug werden durch eine computerisierte Steuerung der entsprechenden Bewegungsachsen bewirkt. Beispielsweise wird für das Profilabrichten die Schwenkwinkelstellung der mit dem Abrichtwerkzeug 23 versehenen Abrichtspindel 21 in Bezug auf die zweite Schwenkbewegungsachse C2 auf einen festen Wert geklemmt. Ferner wird das Verhältnis zwischen der Drehzahl der Abrichtspindel 21 um die Abrichtspindelachse S2 und der Drehzahl der Werkzeugspindel 18 um die Werkzeugspindelachse B1 auf einen festen Wert eingestellt. Die Bewegungen längs der zweiten Linearbewegungsachse Z2 und der dritten Linearbewegungsachse Y1 werden gemäß dem Profil-Abrichtverfahren gesteuert. Für das Form-Abrichten wird die Schwenkwinkelstellung der Abrichtspindel 21 in Bezug auf die zweite Schwenkbewegungsachse C2 auf einen durch den Bezugsdurchmesser des Schleifwerkzeugs 22 bestimmten Wert eingestellt. Die Drehwinkelstellung der Abrichtspindel 21 in Bezug auf die Abrichtspindelachse S2 und die Bewegung längs der dritten Linearbewegungsachse Y1 werden in Abhängigkeit von der Drehwinkelstellung der Werkzeugspindel 18 in Bezug auf die Werkzeugspindelachse B1 gemäß dem Formabrichtverfahren gesteuert. Für ein verschwenkungsfreies Schleifwerkzeug wird zusätzlich die Bewegung längs der zweiten Linearbewegungsachse Z2 gesteuert.

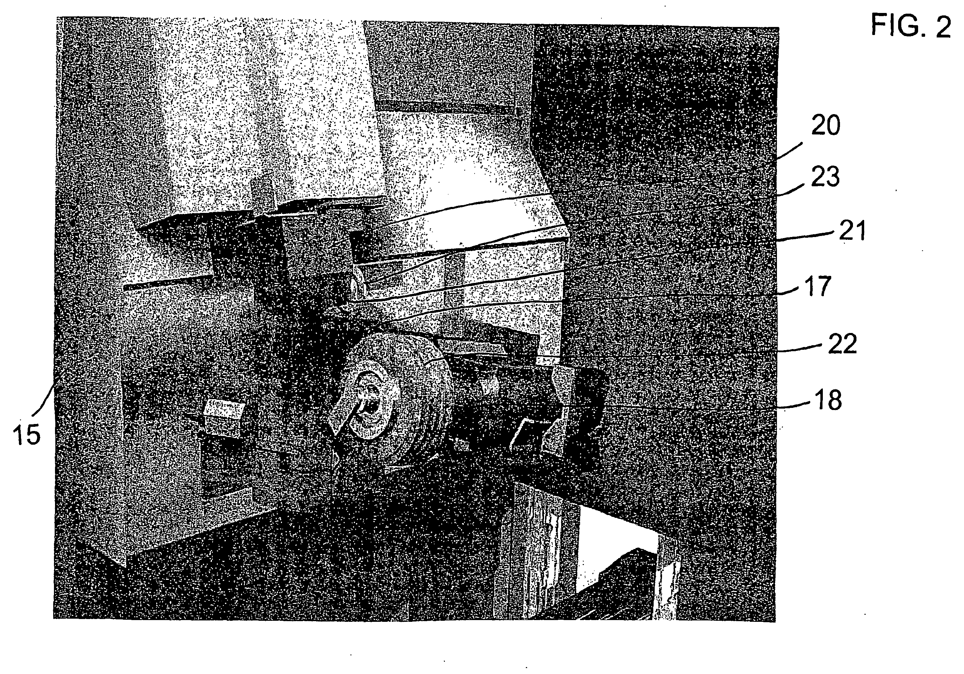

In Fig. 2 ist der Fall dargestellt, daß das von der Schleifspindel 18 angetriebene Schleifwerkzeug 22 eine Schleifschnecke ist. Ferner zeigt Fig. 2 das scheibenförmige Abrichtwerkzeug 23 auf der an der zweiten Schwenkbewegungseinheit 20 angeordneten Abrichtspindel 21.

In Fig. 2 bezeichnet ebenso wie in Fig. 1 das Bezugszeichen 15 die erste Linearbewegungseinheit und das Bezugszeichen 17 die erste Schwenkbewegungseinheit.

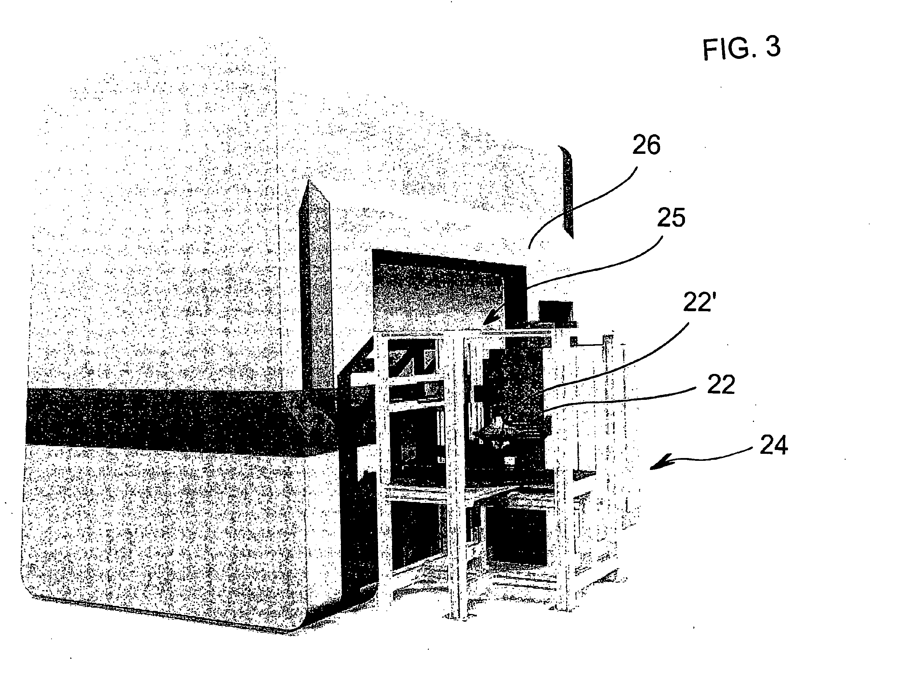

In der perspektivischen Ansicht von Fig. 3 sind die Rückseite und die in Fig. 1 rechte Seite der mit ihrem Gehäuse versehenen Verzahnungsschleifmaschine sichtbar. Innerhalb eines außerhalb des Gehäuses vor der Rückseite angeordneten Gestellrahmens 24 werden Schleifwerkzeuge 22, 22' für den Angriff eines Werkzeugwechslers vorgehalten. Mit diesem Werkzeugwechsler wird jeweils bei Bedarf eines dieser Werkzeuge längs einer in einer zu der ersten Linearbewegungsachse Z1 und zu der Werkstückdrehachse C1 orthogonalen Ebene verlaufenden Bewegungsbahn durch eine in der Rückseite vorgesehene Gehäuseöffnung 25 hindurch bis in den Bewegungsbereich der Werkzeugspindel 18 eingefahren. Letztere übernimmt sodann durch eine entsprechend gesteuerte Bewegung ihrer Bewegungsachsen das Werkzeug von dem Werkzeugwechsler und spannt es in der in Fig. 1 und 2 dargestellten Lage auf die Werkzeugspindel 18 auf. Es versteht sich, daß dieser Werkzeugwechsler in einem umgekehrten Bewegungsablauf auf der Werkzeugspindel 18 aufgespannte Werkzeuge, die auszuwechseln sind, übernimmt und zur Ablage in dem Gestellrahmen 24 nach außen transportiert. Wenn keine Werkzeugwechselvorgänge stattfinden, wird die Gehäuseöffnung 25 durch eine Schiebetür 26 verschlossen.

Die der Rückseite gegenüberliegende Vorderseite des Gehäuses (nicht dargestellt) ist mit einer horizontal verschiebbaren Schiebetür versehen, in deren Öffnungsstellung der zwischen dem Ständer 5 und der Säule 8 liegende Arbeitsbereich der Verzahnungsschleifmaschine von außen zugänglich ist und in deren Schließstellung die Verzahnungsschleifmaschine nach außen hin völlig abgeschirmt ist.

### Verzeichnis der Bezugszeichen

- 1: Maschinenbett
- 2: Oberseite
- 3, 4: Linearführungen
- 5: Ständer
- X1: vierte Linearbewegungsachse
- 6: Linearbewegungsantrieb
- 7: Drehbewegungseinheit
- 8: Säule
- 9: Linearführungen
- 10: Reitstock
- C1: Werkstückdrehachse
- 11: Zentrieransatz
- 12: Seitenfläche
- 13, 14: Linearführungen
- 15: erste Linearbewegungseinheit
- 16: Linearbewegungsantrieb
- 17: erste Schwenkbewegungseinheit
- A1: erste Schwenkbewegungsachse
- 18: Werkzeugspindel
- B1: Werkzeugspindelachse
- Y1: dritte Linearbewegungsachse
- 19: zweite Linearbewegungseinheit
- Z2: zweite Linearbewegungsachse
- 20: zweite Schwenkbewegungseinheit
- C2: zweite Schwenkbewegungsachse
- 21: Abrichtspindel
- S2: Abrichtspindelachse
- 22: Schleifwerkzeug
- 23: Abrichtwerkzeug
- 24: Gestellrahmen
- 25: Gehäuseöffnung
- 26: Schiebetür

## Patentansprüche

1. Verzahnungsschleifmaschine mit einem stationären Maschinenbett (1 ), einer in Bezug auf das Maschinenbett (1) längs einer ersten Linearbewegungsachse (Z1) bewegbaren ersten Linearbewegungseinheit (15), einer an der ersten Linearbewegungseinheit (15) um eine zu deren erster Linearbewegungsachse (Z1) orthogonale erste Schwenkbewegungsachse (A1) schwenkbar angeordneten ersten Schwenkbewegungseinheit (17), einer an der ersten Schwenkbewegungseinheit (17) um eine zu der ersten Schwenkbewegungsachse (A1) orthogonale Werkzeugspindelachse (B1) drehend antreibbar angeordneten Werkzeugspindel (18), einer längs einer zweiten Linearbewegungsachse (Z2) bewegbaren zweiten Linearbewegungseinheit (19), an der eine um eine zu der zweiten Linearbewegungsachse (Z2) orthogonale Abrichtspindelachse (S2) drehend antreibbare Abrichtspindel (21) angeordnet ist, **dadurch gekennzeichnet, dass** die zweite Linearbewegungseinheit (19) an der ersten Linearbewegungseinheit (15) angeordnet ist, aber nicht an der ersten Schwenkbewegungseinheit (17) angeordnet ist.

2. Verzahnungsschleifmaschine nach Anspruch 1, **dadurch gekennzeichnet, daß** die Abrichtspindel (21) an einer an der zweiten Linearbewegungseinheit (19) um eine zu der zweiten Linearbewegungsachse (Z2) parallele zweite Schwenkbewegungsachse (C2) schwenkbar angeordneten zweiten Schwenkbewegungseinheit (20) gelagert ist.

3. Verzahnungsschleifmaschine nach Anspruch 2, **dadurch gekennzeichnet, daß** sich die zweite Schwenkbewegungsachse (C2) und die Werkzeugspindelachse (B1) schneiden.

4. Verzahnungsschleifmaschine nach einem der Ansprüche 1 bis 3, **dadurch gekennzeichnet, daß** sich die erste Schwenkbewegungsachse (A1) und die Werkzeugspindelachse (B1) schneiden.

5. Verzahnungsschleifmaschine nach einem der Ansprüche 1 bis 4, **dadurch gekennzeichnet, daß** die Werkzeugspindel (18) längs einer zur Werkzeugspindelachse (B1) parallelen dritten Linearbewegungsachse (Y1) bewegbar ist.

6. Verzahnungsschleifmaschine nach einem der Ansprüche 1 bis 5, **dadurch gekennzeichnet, daß** sich die zweite Linearbewegungsachse (Z2) in einer zu der ersten Linearbewegungsachse (Z1) und zu der ersten Schwenkbewegungsachse (A1) parallelen Ebene erstreckt.

7. Verzahnungsschleifmaschine nach Anspruch 6, **dadurch gekennzeichnet, daß** die zweite Linearbewegungsachse (Z2) in dieser Ebene gegen die erste Linearbewegungsachse (Z1) geneigt ist.

8. Verzahnungsschleifmaschine nach einem der Ansprüche 1 bis 7, **dadurch gekennzeichnet, daß** an dem Maschinenbett (1) eine um eine Werkstückdrehachse (C1) drehend antreibbare Drehbewegungseinheit (7) angeordnet ist und sich die erste Linearbewegungsachse (Z1) parallel zur Werkstückdrehachse (C1) erstreckt.

9. Verzahnungsschleifmaschine nach Anspruch 8, **dadurch gekennzeichnet, daß** die erste Linearbewegungseinheit (15) in der Richtung der ersten Linearbewegungsachse (Z1) an einer Ständereinheit (5) geführt ist, die an dem Maschinenbett (1) in der Richtung einer vierten Linearbewegungsachse (X1) bewegbar geführt ist, welche sich in einer zu der ersten Linearbewegungsachse (Z1) und der Werkstückdrehachse (C1) parallelen Ebene orthogonal zur ersten Linearbewegungsachse (Z1) erstreckt.

10. Verzahnungsschleifmaschine nach Anspruch 8 oder 9, **dadurch gekennzeichnet, daß** sich die Werkstückdrehachse (C1) vertikal erstreckt.

11. Verzahnungsschleifmaschine nach einem der Ansprüche 8 bis 10, **dadurch gekennzeichnet, daß** ein längs einer in einer zu der ersten Linearbewegungsachse (Z1) und zu der Werkstückdrehachse (C1) orthogonalen Ebene verlaufenden Bewegungsbahn verfahrbarer Werkzeugwechsler vorgesehen ist, durch den ein Werkzeug (22) zwischen einem Magazin und der Werkzeugspindel (18) überführbar ist.

12. Verfahren zum Abrichten eines Schleifwerkzeugs in einer Verzahnungsschleifmaschine mit einem stationären Maschinenbett (1), einer in Bezug auf das Maschinenbett (1) längs einer ersten Linearbewegungsachse (Z1) bewegbaren ersten Linearbewegungseinheit (15) einer an der ersten Linearbewegungseinheit (15) um eine zu deren erster Linearbewegungsachse (Z1) orthogonale erste Schwenkbewegungsachse (A1) schwenkbar angeordneten ersten Schwenkbewegungseinheit (17), und einer an der ersten Schwenkbewegungseinheit (17) um eine zu der ersten Schwenkbewegungsachse (A1) orthogonale Werkzeugspindelachse (B1) drehend antreibbar angeordneten Werkzeugspindel (18), wobei an der ersten Linearbewegungseinheit (15) eine längs einer zweiten Linearbewegungsachse (Z2) bewegbare zweite Linearbewegungseinheit (19) angeordnet ist, an der eine um eine zu der zweiten Linearbewegungsachse (Z2) orthogonale Abrichtspindelachse (S2) drehend antreibbare Abrichtspindel (21) angeordnet ist, und die Abrichtspindel (21) an einer an der zweiten Linearbewegungseinheit (19) um eine zu der zweiten Linearbewegungsachse (Z2) parallele zweite Schwenkbewegungsachse (C2) schwenkbar angeordneten zweiten Schwenkbewegungseinheit (20) gelagert ist, **dadurch gekennzeichnet, daß** die Schwenkwinkelstellung der mit einem Abrichtwerkzeug (23) versehenen Abrichtspindel (21) in Bezug auf die zweite Schwenkbewegungsachse (C2) auf einen an ein auf der Werkzeugspindel (18) angeordnetes Schleifwerkzeugs (22) angepaßten festen Wert eingestellt und das Abrichtwerkzeug (23) mit dem Schleifwerkzeug (22) gemäß einem gewünschten Abrichtverfahren in Eingriff gebracht wird.

13. Verfahren nach Anspruch 12, **dadurch gekennzeichnet, daß** das Verhältnis zwischen der Drehzahl der Abrichtspindel (21) um die Abrichtspindelachse (S2) und der Drehzahl der Werkzeugspindel (18) um die Werkzeugspindelachse (B1) auf einen festen Wert eingestellt und die Bewegungen längs der zweiten und dritten Linearbewegungsachse (Z2, Y1) gemäß einem Profilabrichtverfahren gesteuert werden.

14. Verfahren nach Anspruch 12, **dadurch gekennzeichnet, daß** die Schwenkwinkelstellung der Abrichtspindel (21) in Bezug auf die zweite Schwenkbewegungsachse (C2) auf einen durch den Bezugsdurchmesser des Schleifwerkzeugs bestimmten Wert eingestellt und die Drehwinkelstellung der Abrichtspindel (21) in Bezug auf die Abrichtspindelachse (S2) und die Bewegung längs der dritten Linearbewegungsachse (Y1) in Abhängigkeit von der Drehwinkelstellung der Werkzeugspindel (18) in Bezug auf die Werkzeugspindelachse (B1) gemäß einem Formabrichtverfahren gesteuert werden.

15. Verfahren nach Anspruch 14, **dadurch gekennzeichnet, daß** für ein verschränkungsfreies Schleifwerkzeug zusätzlich die Bewegung längs der zweiten Linearbewegungsachse (Z2) gesteuert wird.

## Claims

1. A gear grinding machine comprising a stationary machine bed (1), a first linear motion unit (15) moveable in relation to the machine bed (1) along a first linear motion axis (Z1), a first swivel motion unit (17) arranged on the first linear motion unit (15) such as to be able to swivel about a first swivel motion axis (A1) orthogonal to the first linear motion axis (Z1) of the latter, a tool spindle (18) arranged on the first swivel motion unit (17) such as to be able to be driven in rotary motion about a tool spindle axis (B1) orthogonal to the first swivel motion axis (A1), a second linear motion unit (19) moveable along a second linear motion axis (Z2) on which a dressing spindle (21) is arranged such as to be able to be driven in rotary motion about a dressing spindle axis (S2) orthogonal to the second linear motion axis (Z2), **characterised in that** the second linear motion unit (19) is arranged on the first linear motion unit (15), but not on the first swivel motion unit (17).

2. The gear grinding machine according to Claim 1, **characterised in that** the dressing spindle (21) is mounted on a second swivel motion unit (20) arranged on the second linear motion unit (19) such as to be able to swivel about a second swivel motion axis (C2) parallel to the second linear motion axis (Z2).

3. The gear grinding machine according to Claim 2, **characterised in that** the second swivel motion axis (C2) and the tool spindle axis (B1) intersect each other.

4. The gear grinding machine according to any of Claims 1 to 3, **characterised in that** the first swivel motion axis (A1) and the tool spindle axis (B1) intersect each other.

5. The gear grinding machine according to any of Claims 1 to 4, **characterised in that** the tool spindle (18) can be moved along a third linear motion axis (Y1) parallel to the tool spindle axis (B1).

6. The gear grinding machine according to any of Claims 1 to 5, **characterised in that** the second linear motion axis (Z2) extends in a plane parallel to the first linear motion axis (Z1) and to the first swivel motion axis (A1).

7. The gear grinding machine according to Claim 6, **characterised in that** the second linear motion axis (Z2) is slanted in this plane towards the first linear motion axis (Z1).

8. The gear grinding machine according to any of Claims 1 to 7, **characterised in that** on the machine bed (1) a rotary motion unit (7) is arranged which can be driven in rotary movement about a workpiece rotation axis (C1) and that the first linear motion axis (Z1) runs parallel to the workpiece rotation axis (C1).

9. The gear grinding machine according to Claim 8, **characterised in that** the first linear motion unit (15) is guided in the direction of the first linear motion axis (Z1) on a stand unit (5) which is guided moveably on the machine bed (1) in the direction of a fourth linear motion axis (X1) which extends orthogonally to the first linear motion axis (Z1) in a plane parallel to the first linear motion axis (Z1) and the workpiece rotation axis (C1).

10. The gear grinding machine according to Claim 8 or 9, **characterised in that** the workpiece rotation axis (C1) extends vertically.

11. The gear grinding machine according to any of Claims 8 to 10, **characterised in that** there is provided a tool changer that can be moved along a path of movement extending in a plane orthogonal to the first linear motion axis (Z1) and to the workpiece rotation axis (C1), by means of which a tool (22) can be transferred between a repository and the tool spindle (18).

12. A method of dressing a grinding tool in a gear grinding machine comprising a stationary machine bed (1), a first linear motion unit (15) moveable in relation to the machine bed (1) along a first linear motion axis (Z1), a first swivel motion unit (17) arranged on the first linear motion unit (15) such as to be able to swivel about a first swivel motion axis (A1) orthogonal to the first linear motion axis (Z1) of the latter, and a tool spindle (18) arranged on the first swivel motion unit (17) such as to be able to be driven in rotary motion about a tool spindle axis (B1) orthogonal to the first swivel motion axis (A1), there being arranged on the first linear motion unit (15) a second linear motion unit (19) that can be moved along a second linear motion axis (Z2) on which a dressing spindle (21) that can be driven in rotary motion about a dressing spindle axis (S2) orthogonal to the second linear motion axis (Z2) is arranged, and the dressing spindle (21) is mounted on a second swivel motion unit (20) which is arranged such as to be able to swivel about a second swivel motion axis (C2) parallel to the second linear motion axis (Z2) on the second linear motion unit (19), **characterised in that** the swivel angle position of the dressing spindle (21) provided with a dressing tool (23) is set in relation to the second pivot motion axis (C2) to a fixed value adapted to a grinding tool (22) arranged on the tool spindle (18), and the dressing tool (23) is brought into engagement with the grinding tool (22) in accordance with a desired dressing method.

13. The method according to Claim 12, **characterised in that** the ratio between the rotation speed of the dressing spindle (21) turning about the dressing spindle axis (S2) and the rotation speed of the tool spindle (18) turning about the tool spindle axis (B1) is set at a fixed value, and the movements along the second and third linear motion axis (Z2, Y1) are controlled in accordance with a profile dressing method.

14. The method according to Claim 12, **characterised in that** the swivel angle position of the dressing spindle (21) in relation to the second swivel motion axis (C2) is set to a value determined by the reference diameter of the grinding tool and the rotary angle position of the dressing spindle (21) in relation to the dressing spindle axis (S2) and the motion along the third linear motion axis (Y1) are controlled depending on the rotary angle setting of the tool spindle (18) in relation to the tool spindle axis (B1) in accordance with a form dressing method.

15. The method according to Claim 14, **characterised in that** for a non-interlocking grinding tool the movement along the second linear motion axis (Z2) is additionally controlled.

## Revendications

1. Rectifieuse pour engrenages présentant un banc fixe (1), une première unité à déplacement linéaire (15) mobile par rapport au banc (1) le long d'un premier axe de déplacement linéaire (Z1), une première unité à mouvement de pivotement (17) montée sur la première unité à déplacement linéaire (15) de manière à pouvoir pivoter sur un premier axe de pivotement (A1) orthogonal à son premier axe de déplacement linéaire (Z1), une broche d'outil (18) montée sur la première unité à mouvement de pivotement (17) de manière à pouvoir être entraînée en rotation autour d'un axe de broche d'outil (B1) orthogonal au premier axe de pivotement (A1), une deuxième unité à déplacement linéaire (19) qui est déplaçable le long d'un deuxième axe de déplacement linéaire (Z2) et sur laquelle est agencée une broche de dressage (21) susceptible d'être entraînée en rotation autour d'un axe de broche de dressage (S2) orthogonal au deuxième axe de déplacement linéaire (Z2), **caractérisée en ce que** la deuxième unité à déplacement linéaire (19) est montée sur la première unité à déplacement linéaire (15) mais pas sur la première unité à mouvement de pivotement (17).

2. Rectifieuse pour engrenages selon la revendication 1, **caractérisée en ce que** la broche de dressage (21) est montée sur une deuxième unité à mouvement de pivotement (20) qui est agencée sur la deuxième unité à déplacement linéaire (19) et qui est susceptible de pivoter autour d'un deuxième axe de pivotement (C2) parallèle au deuxième axe de déplacement linéaire (Z2).

3. Rectifieuse pour engrenages selon la revendication 2, **caractérisée en ce que** le deuxième axe de pivotement (C2) et l'axe de broche d'outil (B1) se croisent.

4. Rectifieuse pour engrenages selon l'une des revendications 1 à 3, **caractérisée en ce que** le premier axe de pivotement (A1) et l'axe de broche d'outil (B1) se croisent.

5. Rectifieuse pour engrenages selon l'une des revendications 1 à 4, **caractérisée en ce que** la broche d'outil (18) peut être déplacée le long d'un troisième axe de déplacement linéaire (Y1) parallèle à l'axe de broche d'outil (B1).

6. Rectifieuse pour engrenages selon l'une des revendications 1 à 5, **caractérisée en ce que** le deuxième axe de déplacement linéaire (Z2) se prolonge dans un plan parallèle au premier axe de déplacement linéaire (Z1) et au premier axe de pivotement (A1).

7. Rectifieuse pour engrenages selon la revendication 6, **caractérisée en ce que** le deuxième axe de déplacement linéaire (Z2) penche, dans ce plan, vers le premier axe de déplacement linéaire (Z1).

8. Rectifieuse pour engrenages selon l'une des revendications 1 à 7, **caractérisée en ce qu'**une unité à mouvement de rotation (7) est montée sur le banc (1) en pouvant être entraînée en rotation autour d'un axe de rotation de pièce à usiner (C1) et **en ce que** le premier axe de déplacement linéaire (Z1) se prolonge de manière parallèle à l'axe de rotation de pièce à usiner (C1).

9. Rectifieuse pour engrenages selon la revendication 8, **caractérisée en ce que** la première unité à déplacement linéaire (15) est guidée, dans la direction du premier axe de déplacement linéaire (Z1), sur une unité de colonne (5) qui est guidée sur le banc (1) de manière à pouvoir se déplacer dans la direction d'un quatrième axe de déplacement linéaire (X1) qui se prolonge orthogonalement au premier axe de déplacement linéaire (Z1) dans un plan qui est parallèle au premier axe de déplacement linéaire (Z1) et à l'axe de rotation de pièce à usiner (C1).

10. Rectifieuse pour engrenages selon la revendication 8 ou 9, **caractérisée en ce que** l'axe de rotation de pièce à usiner (C1) se prolonge à la verticale.

11. Rectifieuse pour engrenages selon l'une des revendications 8 à 10, **caractérisée en ce qu'**il est prévu un changeur d'outil qui est mobile le long d'une voie de déplacement s'étendant dans un plan orthogonal au premier axe de déplacement linéaire (Z1) et à l'axe de rotation de pièce à usiner (C1) et qui permet de transférer un outil (22) entre le magasin et la broche d'outil (18).

12. Procédé de dressage d'un outil de rectification dans une rectifieuse pour engrenages présentant un banc fixe (1), une première unité à déplacement linéaire (15) mobile par rapport au banc (1) le long d'un premier axe de déplacement linéaire (Z1), une première unité à mouvement de pivotement (17) montée sur la première unité à déplacement linéaire (15) de manière à pouvoir pivoter sur un premier axe de pivotement (A1) orthogonal à son premier axe de déplacement linéaire (Z1), et une broche d'outil (18) montée sur la première unité à mouvement de pivotement (17) de manière à pouvoir être entraînée en rotation autour d'un axe de broche d'outil (B1) orthogonal au premier axe de pivotement (A1), en sachant qu'il est agencé, sur la première unité à déplacement linéaire (15), une deuxième unité à déplacement linéaire (19) qui est déplaçable le long d'un deuxième axe de déplacement linéaire (Z2) et sur laquelle est agencée une broche de dressage (21) susceptible d'être entraînée en rotation autour d'un axe de broche de dressage (S2) orthogonal au deuxième axe de déplacement linéaire (Z2), et que la broche de dressage (21) est montée sur une deuxième unité à mouvement de pivotement (20) agencée sur la deuxième unité à déplacement linéaire (19) de manière à pouvoir pivoter autour d'un deuxième axe de pivotement (C2) parallèle au deuxième axe de déplacement linéaire (Z2), **caractérisé en ce que** la position angulaire de pivotement de la broche de dressage (21) équipée de l'outil de dressage (23) par rapport au deuxième axe de pivotement (C2) est fixée à une valeur fixe adaptée à un outil de rectification (22) agencé sur la broche d'outil (18) et **en ce que** l'outil de dressage (23) est amené en prise avec l'outil de rectification (22) selon un procédé de dressage souhaité.

13. Procédé selon la revendication 12, **caractérisé en ce que** le rapport entre la vitesse de rotation de la broche de dressage (21) autour de l'axe de broche de dressage (S2) et la vitesse de rotation de la broche d'outil (18) autour de l'axe de broche d'outil (B1) est réglé à une valeur fixe et les déplacements le long du deuxième et du troisième axe de déplacement linéaire (Z2, Y1) sont contrôlés selon un procédé de dressage de profil.

14. Procédé selon la revendication 12, **caractérisé en ce que** la position angulaire de pivotement de la broche de dressage (21) par rapport au deuxième axe de pivotement (C2) est fixée à une valeur définie par le diamètre de référence de l'outil de rectification, et la position angulaire de rotation de la broche de dressage (21) par rapport à l'axe de broche de dressage (S2) et le déplacement le long de du troisième axe de déplacement linéaire (Y1) en fonction de la position angulaire de rotation de la broche d'outil (18) par rapport à l'axe de broche d'outil (B1) sont contrôlés selon un procédé de dressage de forme.

15. Procédé selon la revendication 14, **caractérisé en ce que** le mouvement le long du deuxième axe de déplacement linéaire (Z2) est également contrôlé dans le cas d'un outil de rectification sans torsion.
